# EUROPÄISCHE PATENTSCHRIFT

(11) **EP 3 403 720 B1**
(45) Veröffentlichungstag und Bekanntmachung des Hinweises auf die Patenterteilung: **27.11.2019**
(21) Anmeldenummer: 18171777.8
(22) Anmeldetag: 11.05.2018
(51) Int. Cl.: B01J 20/18, B01J 20/22, B01J 20/32, F28F 21/06, F28F 13/18

(54) **BAUTEIL, VERFAHREN ZU DESSEN HERSTELLUNG UND DESSEN VERWENDUNG**
COMPONENT, METHOD FOR PRODUCING SAME AND ITS USE
COMPOSANT, SON PROCÉDÉ DE FABRICATION ET SON UTILISATION

(30) Priorität: 16.05.2017 DE 102017208201
(43) Veröffentlichungstag der Anmeldung: 21.11.2018
(73) Patentinhaber: FRAUNHOFER-GESELLSCHAFT zur Förderung der angewandten Forschung e.V., 80686 München (DE)
(72) Erfinder: HENNINGER, Stefan, 79346 Endingen (DE); ERNST, Sebastian-Johannes, 79111 Freiburg (DE); FORMISANO, Benjamin Rocco, 71665 Vaihingen/Enz (DE); BONTEN, Christian, 47804 Krefeld (DE)
(74) Vertreter: Friese Goeden Patentanwälte PartGmbB

(56) Entgegenhaltungen:
- WO-A1-2012/110255
- DE-A1-102011 106 668
- CHEN XIANGJIE ET AL: "Recent research developments in polymer heat exchangers - A review", RENEWABLE AND SUSTAINABLE ENERGY REVIEWS, ELSEVIERS SCIENCE, NEW YORK, NY, US, Bd. 60, 22. März 2016 (2016-03-22), Seiten 1367-1386, XP029505307, ISSN: 1364-0321, DOI: 10.1016/J.RSER.2016.03.024

## Beschreibung

Die Erfindung betrifft ein Bauteil, umfassend ein Substrat, das einen Metallpartikel enthaltenden Kunststoff aufweist, wobei auf das Substrat eine Beschichtung aufgebracht ist. Ferner betrifft die Erfindung ein Verfahren zur Herstellung dieses Bauteils sowie dessen Verwendung als Adsorbens und in Katalyse-Prozessen.

Wärmetauscher für den Einsatz für Adsorptionsanwendungen müssen neben ihren originären Eigenschaften (gute, gerichtete Wärmeleitung durch die Struktur und bestmöglichen Ein- und Austrag in die beziehungsweise aus der Struktur) zusätzliche Anforderungen, die die Verbindung mit einem aktiven Material mit sich bringt, erfüllen: Diese sind beispielsweise stabile Anbindung des aktiven Materials an die Wärmeübertrager-Oberfläche, die Bereitstellung einer großen, für eine Beschichtung zugänglichen Oberfläche, sowie Korrosions- und Temperaturbeständigkeit. Metalle zeigen für viele dieser Anforderungen sehr günstige Eigenschaften wie beispielsweise gute Wärmeleitfähigkeit und die für Anhaftung günstige Oberfläche, sind allerdings unter Umständen anfällig für Korrosion und bedingt durch die hohe Dichte vergleichsweise schwer. Die damit verbundenen großen thermischen Massen sind insbesondere bei zyklischen Systemen nachteilig, da sensibel aufgewärmt und wieder abgekühlt werden muss. Aber auch bei herkömmlichen stationären Prozessen ist die mit dem Metall verbundene hohe Masse und damit das Gewicht nachteilig.

Im Bereich der Adsorptionstechnologie, z. B. bei offenen sorptiven Entfeuchtungs- und Klimatisierungsanlagen oder thermischen Speichern werden bislang Metall-Wärmeüberträger eingesetzt. Als Adsorbentien kommen in der Regel poröse Materialien wie Silicagele, Zeolithe und Zeolith-ähnliche Materialien wie AlPOs (Aluminiumphosphat) oder SAPOs (Silizium-Aluminium-Phosphat) oder auch Metall-organische Gerüstverbindungen (MOF) zum Einsatz.

Möglich ist das Einbringen von granuliertem Adsorbens in einen Rippenrohrwärmeübertrager (DE 10 119 258 A1). In US 6 102 107 wird ein Aufbau beschrieben bestehend aus einem Lamellenwärmeübertrager, auf dessen Lamellen beidseitig eine Adsorbens-Polymer-Kompositfolie aufgebracht wird.

Der Aufbau der Kompositfolie wird in WO 02/45847 beschrieben Weiterhin ist es Stand der Technik, Adsorbentien auf die Metalloberflächen mithilfe von Bindermaterialien aufzubringen (bspw. DE 10 2011 011 688 A1 und DE 10 2008 050 926 A1). Im Bereich der Katalyse sind ebenfalls metallgeträgerte Katalysatoren Stand der Technik. Hierbei werden ebenfalls häufig poröse Materialien auf Metallträger über verschiedene Verfahren aufgebracht.

In DE 10 309 009 A1 wird eine Zeolith-Beschichtung berichtet, die durch eine partielle Umwandlung eines keramischen Trägermaterials hergestellt wird. Die beschriebenen Keramiken sind Silikalit-Keramiken mit verschiedenen Füllstoffen, die bei Temperaturen über 1000 °C unter Argon-Atmosphäre hergestellt werden. Dieses Verfahren ist somit sehr aufwendig. In DE 10 309 009 A1 wird weiterhin ein Überblick über weitere Beschichtungsverfahren gegeben.

In DE 10 2004 052 976 A1 wird die In-situ-Kristallisation von Zeolithen, vornehmlich aber zeolithähnlichen Materialien wie SAPOs und ALPOs, auf metallhaltigen Substraten berichtet. Für die dort beschriebene Beschichtung ist es notwendig, dass das Substrat die netzwerkbildenden Elemente, beispielsweise Aluminium und Silizium, enthält, da diese teilweise in die Beschichtung umgewandelt werden. Die Synthese findet in wässriger Lösung statt. Ebenfalls aus wässriger Lösung wird eine Zeolith-Beschichtung nach US2003/0091872 auf einem Wärmeübertrager als hydrophile und wahlweise antimikrobielle Schicht hergestellt. Eine vergleichbare Antikorrosionsschicht aus Zeolithmaterialien wird in US2002/0110699 A1 beschrieben. Die beiden zuletzt beschriebenen Patentschriften beschreiben jeweils Schichten, die aus Lösungen erzeugt werden, in denen Netzwerkbildner in stöchiometrisch vorliegen, wohingegen in der In-situ Kristallisation nach DE 10 2004 052 976 A1 die Kristallisation aus einer Lösung erfolgt, in der ein mindestens ein Netzwerkbildner aus dem Substrat gelöst werden muss.

Eine Schicht aus SAPO-34 direkt aufkristallisiert auf Graphitstrukturen ist in der Literatur beschrieben (PALOMBA ET. AL.: Energy Procedia, 2105. 81, S. 1030-1040).

Erst kürzlich wurde in zwei Patentanmeldungen die Direktaufkristallisation auf metallischen Trägern beschrieben:
In DE 10 2011 106 668 A1 wird die Beschichtung eines Bauteils mit MOF entlang eines Temperaturgradienten beschrieben. Hierfür wird das Bauteil beheizt und mit einer Reaktionslösung in Kontakt gebracht, woraufhin sich das gewünschte Adsorbens mit guter Anbindung an der Oberfläche des Bauteils bildet. In EP 299 837 8 A1 wird ein Verfahren zur Beschichtung von Metallsubstraten beschrieben, in dem das Adsorbens mit aus dem Substrat herausgelösten Bestandteilen synthetisiert wird.

Die genannten Beschichtungen werden vorzugsweise auf metallischen oder keramischen Trägern erzeugt und sind dementsprechend schwer und aufwendig herzustellen (hohe Temperaturen, zum Teil erhöhte Drücke, Inertgasatmosphäre, eingeschränkte Geometrien).

In EP 0488287 wird ein Adsorbens-Komposit mit guter Wärmeleitfähigkeit beschrieben. Für die Herstellung des Komposits werden abwechselnd gut wärmeleitfähige Materialien (genannt werden Metalle und Graphit) mit Adsorbens-Binder-Polymer-Schichten gestapelt. Das beschriebene Adsorbens ist Aktivkohle.

In DE 10 2008 023 481 B4 ist ein Adsorptionswerkstoff und die Herstellung desselben geschützt, der sich aus einem Adsorbens und einer gut wärmeleitenden Komponente zusammensetzt und eine Schaum- oder Schwammstruktur aufweist. Hierfür muss das Adsorbens bereits in fertiger Form vorliegen. Eine Mischung aus Adsorbens und mindestens einer weiteren Komponente wird dann geschmolzen und aufgeschäumt oder in eine Preform gegossen, die später ausgebrannt wird. Diese Verfahren bedingen erhöhte Temperaturen, denen nicht alle Adsorbentien standhalten. Außerdem setzt es fertig vorliegendes Adsorbens in fester Form voraus.

In der Literatur werden darüber hinaus Zeolithbeschichtungen auf polymeren Teflonsubstraten beschrieben (SANO, ET. AL.: Steaming of ZSM-5 Zeolite Film. In: Zeolites, 1992. 12(2), S 131-134; IWASAKI, ET. AL.: Direct Observation of the Formation Process of Silicalite Films on Various Substrates, In: Micropor. Mesopor. Mater., 2000. 38(1), S. 75). In einer weiteren Arbeit wird die rein theoretische Möglichkeit einer Zeolith-Schicht erwähnt, welche auf einem PTFE via Temperaturgradientenmethode erzeugt (TATLIER UND ERDEM-SENATALAR: Polymeric Heat Exchangers to Increase the COP Values of Adsorption Heat Pumps Utilizing Zeolite Coatings. In: Appl. Therm. Eng., 2004. 24, S. 69- 78) und für die Anwendung in der Wärmetransformation rechnerisch sehr positiv evaluiert wird.

Ausgehend vom Stand der Technik liegt der Erfindung somit die Aufgabe zugrunde, ein Bauteil sowie ein Verfahren zu seiner Herstellung bereitzustellen, das nicht die aus dem Stand der Technik bekannten Nachteile aufweist. Insbesondere soll ein im Vergleich zu Metallen leichteres Trägermaterial gefunden werden, das gleichzeitig noch eine ausreichende Wärmeleitfähigkeit aufweist und sich insbesondere als Substrat für poröse Materialien und der Einbringung von porösen Materialien eignet.

Die Aufgabe wird erfindungsgemäß durch ein Bauteil gemäß Anspruch 1, ein Verfahren zu seiner Herstellung nach Anspruch 11 sowie seine Verwendung nach Anspruch 13 gelöst. Erfindungsgemäß wird ein Bauteil vorgeschlagen, das ein Substrat umfasst, das einen Metallpartikel umfassenden Kunststoff enthält, wobei das Substrat zumindest teilweise beschichtet ist mit mindestens einer Verbindung ausgewählt aus Zeolith, wie Zeolith A, Zeolith Y oder Zeolith X sowie deren Ionen ausgetauschte Varianten, den zeolithähnlichen Materialien (zeolithartige Materialien), AlPO, insbesondere AlPO-18, SAPO, insbesondere SAPO-34, SAPO-42, und weitere Aluminiumsilicate, sowie einer Metall-organischen Gerüstverbindung, wie beispielsweise Kupfer-Trimesat HKUST-1, Aluminim-Fumarat und Eisen-Trimesat MIL-100(Fe).

Metall-organische Gerüstverbindungen sind mikroporöse kristalline Materialien, die aus metallischen Knotenpunkten, den sogenannten SBUs (Secondary Building Units) und organischen Molekülen (Linkern) als Verbindungselementen zwischen den Knotenpunkten aufgebaut sind. Es können ein-, zwei- und drei-dimensionale Netzwerke ausgebildet werden.

Bauteile mit einer Schicht aus einer Metall-organischen Gerüstverbindung sind aus der vorstehend genannten DE 10 2011 106 668 A1 bekannt. Ferner ist in diesem Stand der Technik auch die Herstellung solcher Bauteile mit einer Schicht aus einer Metall-organischen Gerüstverbindung beschrieben.

In einigen Ausführungsformen ist das Bauteil dadurch erhältlich, dass die mindestens eine Verbindung ausgewählt aus Zeolith, Zeolith-ähnlichem Material, wie SAPO, AlPO oder Metall-organischer Gerüstverbindung direkt auf das Substrat aufkristallisiert ist. Eine solche direkte Aufkristallisation, bei der die Moleküle des Zeolithen, Zeolith-ähnlichem Material oder der Metall-organischen Gerüstverbindung sukzessive ausgehend vom Metallpartikel enthaltenden Kunststoff aufgebaut werden, unterscheidet sich in struktureller Hinsicht von zweischichtigen Bauteilen, bei dem eine Schicht den Metallpartikel enthaltenden Kunststoff und die andere Schicht die aufzubringende Verbindung ist, wobei diese beiden Schichten getrennt voneinander hergestellt und nachfolgend zusammengebracht werden. Dies bedeutet in anderen Worten, dass die erfindungsgemäßen Bauteile, die durch direkte Aufkristallisation erhältlich sind, eine andere Struktur aufweisen als Bauteile, bei denen die beiden Schichten separat hergestellt und dann miteinander verbunden werden.

Bei der direkten Aufkristallisiation der vorstehenden Verbindungen, insbesondere der Metall-organischen Gerüstverbindungen, auf den Metallpartikel enthaltenden Kunststoff können Precursoren (Vorläuferverbindungen) der Metallpartikel mit einem Lösungsmittel, beispielweise Dimethylformamid (DMF), bei erhöhter Temperatur umgesetzt werden. Überraschenderweise wurde nun festgestellt, dass diese direkte Aufkristallisation auf diese Art und Weise überhaupt möglich ist. Denn der Fachmann hätte erwartet, dass durch die Verwendung eines organischen Lösungsmittels, insbesondere DMF, der Kunststoff in einer derartigen Art und Weise angegriffen wird, dass die Aufkristallisation von Zeolith, SAPO, AlPO oder einer Metall-organischen Gerüstverbindung gar nicht möglich ist oder zumindest keine ausreichend feste Verbindung zwischen diesen Schichten erhalten wird.

Wie vorstehend beschrieben wurde kann im erfindungsgemäßen Bauteil eine Beschichtung aus einer metall-organischen Gerüstverbindung (nachfolgen auch als MOF (metall-organic framework) bezeichnet) vorliegen. Dabei kann die MOF-Schicht im Wesentlichen ein MOF aus einem Metall und/oder Halbmetall des Perioden- systems, bevorzugt ein MOF der Elemente der Gruppen 2, 3, 4, 5, 6, 7, 8, 9, 10, 11, 12, 13, 14, 15 und/ oder der Lanthanoide des Periodensystems, besonders bevorzugt Cu-, Cr-, Al-, Fe-, Ti-, Zr- oder Zn-MOF sein. Die MOF-Schicht kann eine Dicke von 5-100 µm, insbesondere 10-50 µm, ganz besonders 20-30 µm und/oder Makroporen von ca. 1-10 µm, insbesondere 2-8 µm, beispielsweise 4-6 µm Durchmesser aufweisen. Die MOF-Schicht kann mindestens eine wenigstens zweizähnige organische Verbindung enthalten. Die mindestens eine wenigstens zweizähnige organische Verbindung kann eine funktionelle Gruppe enthalten, welche in der Lage ist, zu mindestens zwei Metallionen mindestens zwei koordinative Bindungen auszubilden. Die funktionelle Gruppe kann -COOH, -CS₂H, -NO₂, -S(OH)₂ und -SO₃H sein. Bei der mindestens einen wenigstens zweizähnigen organischen Verbindung kann es sich um einen Stickstoff-Heterozyklus, insbesonder ausgewählt aus der Gruppe bestehend aus Pyrazolat, Triazolat, Tetrazolat, lmidazolat, Pyrimidin, Pyridazin und Pyrazin, ein aliphatisches oder aromatisches Aminen und/ oder ein Phosphan handeln.

In einigen Ausführungsformen der Erfindung weist der Kunststoff einen thermoplastischen Kunststoff auf oder besteht daraus. Beispiele für thermoplastische Kunststoffe sind Polyolefine, insbesondere Polyethylen (PE) und/oder Polypropylen (PP), Acrylnitril-Butadien-Styrol (ABS), Polyamid (PA), Polyacetat (PA), Polymethylmethacrylat (PMMA), Polycarbonat (PC), Polyethylenterephthalat (PET), Polystyrol (PS), Polyetheretherketon (PEEK) und Polyvinylchlorid (PVC). Dabei können Mischungen von zwei oder mehr dieser Kunststoffe im erfindungsgemäßen Bauteil vorliegen.

Die im Kunststoff enthaltenen Metallpartikel werden günstigerweise so gewählt, dass die darauf aufzukristallisierende Verbindung (Zeolith, SAPO, AlPO oder Metall-organische Gerüstverbindung) besonders gut aufkristallisiert und mit dem Substrat verbunden wird. Beispiele dafür sind insbesondere Aluminium, Kupfer, Eisen, Cobalt, Nickel, Zink, Chrom, Zirkonium und Lithium mit denen dies in besonders günstiger Weise erreicht wird. Es können Mischungen von zwei oder mehr voneinander verschiedenen Metallpartikeln vorliegen.

In einer Ausführungsform kann die Menge der Metallpartikel mehr als 0 Gew.-% bis 30 Gew.-%, bezogen auf das Substrat, d. h. die Menge von Metallpartikel und Kunststoff, betragen. Auf diese Art und Weise ist es möglich zu erreichen, dass das Substrat gut verarbeitbar ist und gleichzeitig die durch das Metall erreichten Eigenschaften in besonders günstiger und wirtschaftlicher Weise erreicht werden.

Ferner kann in einigen Ausführungsformen die Größe der Metallpartikel von 30 µm bis 150 µm, insbesondere 60 µm bis 80 µm betragen. Die Größe der Metallpartikel wird dabei durch Röntgenbeugung oder an sich bekannte optische Verfahren gemessen.

In einigen Ausführungsformen können die Metallpartikel eine regelmäße und/oder eine unregelmäßige Form aufweisen. Eine regelmäßige Form bedeutet dabei, dass die Metallpartikel hinsichtlich ihrer äußeren Gestalt einer bestimmten festen Ordnung bzw. Regelung entsprechen. Die Metallpartikel können auch eine unregelmäßige Form aufweisen, wobei der Begriff "unregelmäßig" darauf hinweist, dass die bei den regelmäßigen Metallpartikeln vorliegende bestimmte und feste Ordnung und Regelung nicht gegeben ist. Im Substrat können Metallpartikel mit einer regelmäßigen Form zusammen mit Metallpartikeln einer unregelmäßigen Form vorliegen. In einigen Ausführungsformen können die Metallpartikel plättchenförmig, kugelförmig, faserförmig sein oder die Form von Whisker aufweisen.

Mit den vorstehend beschriebenen Merkmalen der Größe der Metallpartikel und der Form der Metallpartikel kann die Wärmeleitfähigkeit des Substrats in günstiger und einfacher Weise so eingestellt werden, dass es die entsprechend den Anwendungen erforderlichen Vorgaben erfüllt.

In einigen Ausführungsformen sind die Metallpartikel so orientiert, dass die Wärmeabfuhr begünstigt wird. Die vorstehend genannten Metallpartikel, die eine unregelmäßige Form aufweisen, beispielweise die Form von Plättchen oder Fasern, können eine längliche Ausrichtung haben, wobei die Metallpartikel im Substrat dann so orientiert sein können, dass sie in Wärmeabfuhrrichtung orientiert sind. Auf diese Weise kann die Wärmeabfuhr begünstigt werden. Die Orientierung der Metallpartikel in Kunststoff kann über eine entsprechend Strömung im Werkzeug, zum Beispiel Dehn- oder Scherströmungen eingestellt werden. Der Fachmann kennt hierzu notwendige Maßnahmen und Methoden, um die Orientierung der Metallpartikel im Kunststoff einzustellen.

In einigen Ausführungsformen können die Metallpartikel in Kunststoff entweder homogen verteilt sein oder es kann eine gradierte Struktur der Metallpartikel im Kunststoff vorliegen. Der Ausdruck "gradierte Struktur" weist darauf hin, dass die Verteilung der Metallpartikel im Kunststoff nicht homogen sondern allmählich abgestuft ist. Dabei kann der Anteil der Metallpartikel in der Nähe der Oberfläche erhöht sein, während er im Vergleich dazu in weiter innen liegenden Bereichen erniedrigt ist. Möglich ist eine im Vergleich dazu auch umgekehrte gradierte Struktur, bei der im Inneren des Kunststoffs eine erhöhte Menge an Metallpartikeln im Vergleich zu äußeren Bereichen vorliegt. Durch die Metallpartikel und deren Verteilung im Kunststoff kann das Aufwachsen der Beschichtung aus Zeolith SAPO, AlPO oder einer Metall-organischen Gerüstverbindung und die Wärmeabfuhr gesteuert werden. Die Metallpartikel im äußeren Bereich des Kunststoffs wirken sich günstig auf das Aufwachsen der entsprechenden Verbindungen zur Beschichtung aus. Durch die Metallpartikel im Inneren kann die Wärmeabfuhr entsprechend gesteuert werden. Die Gradierung der Metallpartikel kann durch Co-Extrusion, formlose Formgebung, wie etwa 3D-Druck, Stereolithographie, Mehrkomponentenspritzgießen und Plattenpressen hergestellt werden. Der Fachmann kennt Verfahren und hierzu notwendige Materialien, um eine gradierte Struktur der Metallpartikel in Kunststoffen herzustellen.

In einer Ausführungsform ist das erfindungsgemäße Bauteil so ausgestaltet, dass es als Adsorber ausgebildet ist. Ein Adsorbens dient zur Entfernung von Stoffen aus Fluiden, wobei sich diese Stoffe aufgrund von Van-der-Waals-Kräften adsorptiv an der Oberfläche des Adsorbens anlagern.

Gegenstand der Erfindung ist ebenfalls ein Verfahren zur Herstellung des vorstehend näher beschriebenen erfindungsgemäßen Bauteils. Dieses erfindungsgemäße Verfahren umfasst die folgenden Schritte:
Herstellen eines Substrats durch Einbringen von Metallpartikeln in einen Kunststoff und
zumindest teilweises Beschichten des Metallpartikel aufweisenden Kunststoffs mit mindestens einer Verbindung, ausgewählt unter Zeolith, den vorstehend genannten Zeolithähnlichen Materialien und einem Metall-organischen Gerüst.

Die Herstellung des Metallpartikel aufweisenden Kunststoffs kann durch übliche Verfahren erfolgen, wie Doppel-/Mehrschneckenextruder, in denen die Kunststoffe mit den Metallpartikeln vermischt werden. Die Verarbeitung des Metallpartikel aufweisenden Kunststoffs kann ebenfalls in üblicher Weise erfolgen, beispielsweise durch Extrusion, Spritzgießen, Spritzprägen, Kalandrieren. Die Weiterverwendung von Halbzeug kann beispielsweise durch Thermoformen erfolgen. Ebenfalls ist ein Formen beim Extrudieren oder Spritzgießen denkbar. Auch formlose Formgebungsverfahren, wie beispielsweise 3D-Druck können eingesetzt werden. Dem Fachmann sind vorstehende Verfahren bekannt, sodass er weiß, wie sie durchgeführt werden können.

In einigen Ausführungsformen kann das zumindest teilweise Beschichten dadurch erfolgen, dass die mindestens eine Verbindung direkt auf das Substrat aufkristallisiert wird.

Dieses Direktaufkristallisationsverfahren soll nachfolgend beispielhaft anhand der Metall-organischen Gerüstverbindung geschildert werden, wobei ausdrücklich darauf hingewiesen wird, dass in entsprechender Weise der Fachmann auch Zeolith, Zeolith-ähnliche Verbindungen, wie SAPO und AlPO, direkt auf das Substrat aufkristallisieren kann.

Zur Beschichtung durch eine Direktaufkristallisation der MOF-Schicht auf den Metallpartikel enthaltenden Kunststoffs kann dieser Kunststoff mit einer Lösung enthaltend mindestens ein Metallsalz, mindestens einen Linker und mindestens ein Lösungsmittel in Kontakt gebracht werden, wobei die Lösung einen Temperaturgradienten aufweisen kann, wobei die Temperatur der Lösung unmittelbar an der Oberfläche des Kunststoffes die Kristallisation einer MOF-Schicht auf der Oberfläche des Bauteils ermöglicht, während die Temperatur der restlichen Lösung die Bildung von MOF-Kristallen in der restlichen Lösung verhindert. Das MOF kann aus einem Metall und/oder Halbmetall des Periodensystems, insbesondere ein MOF der Elemente der Gruppen 2, 3, 4, 5, 6, 7, 8, 9, 10, 11, 12, 13, 14, 15 und/ oder der Lanthanoide des Periodensystems, besonders bevorzugt ein Cu-, Cr-, Al-, Fe-, Ti-, Zr- oder Zn- MOF sein. Der Linker kann eine mindestens zweizähnige organische Verbindung sein. Der Linker kann mindestens eine funktionelle Gruppe enthalten, welche in der Lage ist, zu mindestens zwei Metallionen mindestens zwei koordinative Bindungen auszubilden, beispielsweise -COOH, -CS₂H, -NO₂, -B(OH)₂ und -SO₃H. Bei dem Linker kann es sich beispielsweise handeln um einen Stickstoff-Heterozyklus, insbesondere ausgewählt aus der Gruppe bestehend aus Pyrazolat, Triazolat, Tetrazolat, lmidazolat, Pyrimidin, Pyridazinund Pyrazin, ein aliphatisches oder aromatisches Amin und/ oder ein Phosphan. Die Temperatur an der Oberfläche kann über eine Temperiervorrichtung eingestellt werden, wobei die Temperiervorrichtung ein elektrisches Heizelement sein kann. Die Temperatur an der Oberfläche kann unter Verwendung von mindestens einem Temperaturfühler, auf eine Temperatur in dem Bereich von 50°C bis 200°C, beispielsweise 70-170°C, insbesondere 88°C-150°C, eingestellt werden. Die Temperatur der restlichen Lösung kann durch eine Kühlvorrichtung, beispielsweise ein Kryostat und/oder ein Eiswasser-Bad eingestellt werden. Vor dem Beschichtungsvorgang kann der die Metallpartikel enthaltende Kunststoff gespült werden, beispielsweise mit Ethanol.

Hinsichtlich des Substrats, d. h. des Metallpartikel aufweisenden Kunststoffs wird auf vorstehende Ausführungen zur Vermeidung unnötiger Wiederholungen in vollem Umfang verwiesen.

Das erfindungsgemäße Bauteil eignet sich in besonderer günstiger Weise als Adsorbens. Wie bereits vorstehend angegeben, dient ein Adsorbens (Adsorptionsmittel) zur Entfernung von Stoffen aus Fluiden, wobei diese Stoffe sich aufgrund von Van-der-Waals-Kräften adsorptiv an der Oberfläche des Adsorbens anlagern.

In einigen Ausführungsformen kann das Adsorbens in einem offenen Sorptionsprozess, insbesondere für die Entfeuchtung, Klimatisierung, Trocknung und Kühlung, eingesetzt werden. In einigen Ausführungsformen kann das Adsorbens in einem geschlossenen Sorptionsprozess, insbesondere für zyklische Adsorptionsprozesse, eingesetzt werden. Ferner kann das erfindungsgemäße Bauteil in allgemeinen Sorptionsprozessen, wie beispielsweise die Aufkonzentrierung von Schadstoffen (VOC Concentrator) oder die Stofftrennung, insbesondere über einen TSA-(Temperature Swing Sorption)Prozess eingesetzt werden.

Durch die vorliegende Erfindung, insbesondere in den vorstehend beschriebenen Ausführungsformen, ist es möglich, leichte Trägermaterialien mit einer funktionellen Schicht aus Zeolith, wie Zeolith A, Zeolith Y oder Zeolith X sowie deren Ionen ausgetauschte Varianten, zeolithähnliche Materialien, wie AlPO, insbesondere AlPO-18, oder SAPO, insbesondere SAPO-34, SAPO-42 und MOF, wie beispielsweise Kupfer-Trimesat HKUST-1, Aluminim-Fumarat, das Eisen-Trimesat MIL-100(Fe) für die Verwendung in Sorptionsprozessen oder Katalyse-Prozesse zu versehen. Die Erfindung ermöglicht verglichen mit Metallen, wie sie beispielsweise der in der DE 10 2011 106 668 A1 eingesetzt werden, leichtere Strukturen hinsichtlich des Gesamtgewichts als auch hinsichtlich der thermischen Masse bereitzustellen. Das erfindungsgemäße Bauteil weist eine vorstehend ausführlich beschriebene Beschichtung auf, die bei Verwendung in Sorptionsprozessen folgende Vorteile bietet. Es können leichte Bauteile und damit höhere Leistungsdichten bezogen auf die Masse bereitgestellt werden. Geringere thermische Massen erhöhen die Effizienz in Sorptionsprozessen, da die sensiblen Massen reduziert und gleichzeitig die Verluste minimiert werden. Die erfindungsgemäßen Bauteile eigenen sich bestens für mobile Anwendungen, da sie ein geringes Gewicht aufweisen. Durch die erfindungsgemäßen Bauteile wird nicht nur eine Gewichtsreduktion sondern auch eine Kostenreduktion erreicht. Kunststoffe, wie sie in den erfindungsgemäßen Bauteilen vorliegen, bieten bessere Möglichkeiten in der Formgebung und damit in den Funktionalitäten. Die Designs können frei gewählt werden und durch in der Kunststofftechnik an und für sich bekannte Verfahren hergestellt werden. Ferner sind die erfindungsgemäßen Bauteile korrosionsbeständig.

Die vorliegende Erfindung wird nachfolgend anhand von Beispielen näher erläutert. Es wird ausdrücklich darauf hingewiesen, dass diese Beispiele nicht so verstanden werden sollen, dass die Erfindung darauf zu beschränken ist.

### Beispiele

### Beispiel 1

Ein direkt beheiztes (130 °C) Werkstück aus einem mit Kupfer gefülltes Kunststoffextrudat (Ultramid B3 (Polyamid 6, BASF) + Cubrotec 5000 (Cu-Plättchen x₁₀ = 12,5 µm, x₅₀ = 34,8 µm, x₉₀ =62,0 µm, mittlerer Durchmesser: 35 µm, Plättchendicke: ca. 1 µm, Carl Schenk AG)) in der Größe von 20 x 30 x 1 mm mit ca. 30 Gew.-% Cu wurde in einer Reaktionslösung bestehend aus 8,75 g Kupfernitrat-Trihydrat, 4,2 g Trimesinsäure und 250 ml Dimethylformamid (DMF) eingetaucht. Das Werkstück wurde vor der Beschichtung mit Ethanol gespült. Nach kurzer Zeit bildete sich eine blaue Schicht, die mittels Röntgenbeugung (XRD) als Metall-organische Gerüstverbindung Kuper-Trimesat (HKUST-1) identifiziert werden konnte.

### Beispiel 2

Ein direkt beheiztes (130 °C) Werkstück aus einem mit Kupfer gefülltes Kunststoffextrudat (Polystyrol + STANDART Chromal I (Al-Plättchen, Siebrückstand 71 µm: 98,0 - 100,0 %, x₅₀ = 39 µm, ECKART GmbH)) in der Größe von 20 x 30 x 1 mm mit ca. 30 Gew.-% Cu wurde in eine Reaktionslösung eingetaucht, die 20,08 g Aluminiumnitrat-Nonahydrat, 10,68 g Fumarsäure und 250 ml DMF aufwies. Das Werkstück wurde vor der Beschichtung mit Ethanol gespült. Nach kurzer Zeit bildete sich eine weiße Schicht, die mittels Röntgenbeugung (XRD) als Metall-organische Gerüstverbindung Aluminium-Fumarat identifiziert wurde.

### Beispiel 3

Ein direkt beheiztes (130 °C) Werkstück aus einem mit Aluminium gefüllten Kunststoffextrudat (Polystyrol + STANDART Chromal I (Al-Plättchen, Siebrückstand 71 µm: 98,0 - 100,0 %, x₅₀ = 39 µm, ECKART GmbH)) in der Größe von 20 x 30 x 1 mm mit ca. 10 Gew.-% Al wurde in eine Reaktionslösung aus 20,08 g Aluminiumnitrat-Nonahydrat, 10,68 g Fumarsäure und 250 ml DMF eingetaucht. Das Werkstück wurde vor der Beschichtung mit Ethanol gespült. Nach einiger Zeit bildete sich eine weiße Schicht, die im XRD eindeutig als die Metall-organische Gerüstverbindung Aluminium-Fumarat identifiziert wurde.

## Patentansprüche

1. Bauteil, umfassend ein Substrat, das einen Metallpartikel enthaltenden Kunststoff umfasst, wobei das Substrat zumindest teilweise beschichtet ist mit mindestens einer Verbindung, ausgewählt aus Zeolith, den Zeolith-ähnlichen Materialien Aluminiumphosphat, Silizium-Aluminium-Phosphat und Aluminiumsilikat und/oder einer Metall-organischen Gerüstverbindung.

2. Bauteil nach Anspruch 1, wobei es dadurch erhältlich ist, dass die mindestens eine Verbindung direkt auf das Substrat aufkristallisiert ist.

3. Bauteil nach Anspruch 1 oder 2, wobei der Kunststoff einen thermoplastischen Kunststoff aufweist oder daraus besteht.

4. Bauteil nach einem der Ansprüche 1 bis 3, wobei die Metallpartikel ausgewählt sind unter Al, Cu, Fe, Co, Ni, Zn, Cr, Zr, Li und Mischungen von mindestens zwei dieser Metalle.

5. Bauteil nach einem der Ansprüche 1 bis 4, wobei die Menge der Metallpartikel mehr als 0 Gew.-% bis 30 Gew.-% des Bauteils beträgt.

6. Bauteil nach einem der Ansprüche 1 bis 5, wobei die Metallpartikel eine Größe von 30 µm bis 150 µm aufweisen, die durch Röntgenbeugung oder optische Verfahren gemessen werden.

7. Bauteil nach einem der Ansprüche 1 bis 6, wobei die Metallpartikel eine regelmäßige und/oder eine unregelmäßige Form aufweisen, insbesondere wobei die Metallpartikel plättchenförmig, kugelförmig, faserförmig sind oder die Form von Whisker aufweisen.

8. Bauteil nach einem der Ansprüche 1 bis 7, wobei die Metallpartikel so orientiert sind, dass eine längliche Ausrichtung der Metallpartikel in Wärmeabfuhrrichtung orientiert ist.

9. Bauteil nach einem der Ansprüche 1 bis 8, wobei die Metallpartikel im Kunststoff homogen verteilt sind oder eine gradierte Struktur vorliegt.

10. Bauteil nach einem der Ansprüche 1 bis 9, wobei es als Adsorber ausgebildet ist.

11. Verfahren zur Herstellung eines Bauteils, umfassend die folgenden Schritte:
Herstellen eines Substrates durch Einbringen von Metallpartikel in einen Kunststoff und zumindest teilweises Beschichten des Metallpartikel aufweisenden Kunststoffs mit mindestens einer Verbindung, ausgewählt aus Zeolith, den Zeolith-ähnlichen Materialien Aluminiumphosphat, Silizium-Aluminium-Phosphat und Aluminiumsilikat und einer metall-organischen Gerüstverbindung.

12. Verfahren nach Anspruch 11, wobei das zumindest teilweise Beschichten dadurch erfolgt, dass die mindestens eine Verbindung direkt auf das Substrat aufkristallisiert wird.

13. Verwendung des Bauteils nach einem der Ansprüche 1 bis 10 als Adsorbens und in Katalyse-Prozessen.

14. Verwendung nach Anspruch 13, wobei das Adsorbens in einem offenen Sorptionsprozess, insbesondere für die Entfeuchtung, Klimatisierung, Trocknung und Kühlung, eingesetzt wird oder
wobei das Adsorbens in einem geschlossenen Sorptionsprozess, insbesondere für zyklische Adsorptionsprozesse, eingesetzt wird oder
wobei das Adsorbens in einem allgemeinen Sorptionsprozess, wie die Aufkonzentrierung von Schadstoffen und die Stofftrennung eingesetzt wird.

## Claims

1. Component comprising a substrate which includes a plastic material containing metal particles, wherein the substrate is at least partially coated with at least one compound selected from zeolite, the zeolite-like materials aluminum phosphate, silicon-aluminum-phosphate and aluminum silicate and/or a metal-organic framework.

2. Component according to claim 1, wherein it is obtainable in that the at least one compound is crystallized directly onto the substrate.

3. Component according to claim 1 or 2, wherein the plastic material comprises or consists of a thermoplastic resin.

4. Component according to any of claims 1 to 3, wherein the metal particles are selected from Al, Cu, Fe, Co, Ni, Zn, Cr, Zr, Li and mixtures of at least two of these metals.

5. Component according to any of claims 1 to 4, wherein the amount of the metal particles is more than 0 wt.% to 30 wt.% of the component.

6. Component according to any of claims 1 to 5, wherein the metal particles have a size of 30 µm to 150 µm, measured by X-ray diffraction or optical methods.

7. Component according to any of claims 1 to 6, wherein the metal particles have a regular and/or an irregular shape, in particular wherein the metal particles are platelet-shaped, spherical, fibrous or have the shape of whiskers.

8. Component according to any of claims 1 to 7, wherein the metal particles are oriented such that an elongated orientation of the metal particles is aligned in the heat dissipation direction.

9. Component according to any of claims 1 to 8, wherein the metal particles are homogeneously distributed in the plastic material or a graded structure is present.

10. Component according to any of claims 1 to 9, wherein it is formed as an adsorber.

11. Method for producing a component comprising the following steps:
preparing a substrate by introducing metal particles into a plastic material and at least partially coating the plastic material having metal particles with at least one compound selected from zeolite, the zeolite-like materials aluminum phosphate, silicon-aluminum-phosphate and
aluminum silicate and a metal-organic framework.

12. Method according to claim 11, wherein the at least partial coating is carried out by crystallizing the at least one compound directly onto the substrate.

13. Use of the component according to any of claims 1 to 10 as an adsorbent and in catalysis processes.

14. Use according to claim 13, wherein the adsorbent is used in an open sorption process, in particular for dehumidification, air conditioning, drying and cooling, or
wherein the adsorbent is used in a closed sorption process, in particular for cyclic adsorption processes, or
wherein the adsorbent is used in a general sorption process, such as the concentration of pollutants and the separation of substances.

## Revendications

1. Pièce, comportant un substrat qui comprend une matière plastique contenant des particules métalliques, le substrat étant au moins partiellement revêtu par au moins un composé choisi parmi le zéolithe, les matériaux similaires au zéolithe que sont le phosphate d'aluminium, le phosphate de silicium et d'aluminium et le silicate d'aluminium, et/ou par un composé de structure métallo-organique.

2. Pièce selon la revendication 1, laquelle peut obtenue du fait que ledit au moins un composé est cristallisé directement sur le substrat.

3. Pièce selon la revendication 1 ou 2, dans laquelle la matière plastique présente ou est constituée en une matière thermoplastique.

4. Pièce selon l'une des revendications 1 à 3, dans laquelle les particules métalliques sont choisies parmi Al, Cu, Fe, Co, Ni, Zn, Cr, Zr, Li et des mélanges d'au moins deux de ces métaux.

5. Pièce selon l'une des revendications 1 à 4, dans laquelle la quantité des particules métalliques est de plus de 0 % en poids à 30 % en poids de la pièce.

6. Pièce selon l'une des revendications 1 à 5, dans laquelle les particules métalliques présentent une taille de 30 µm à 150 µm qui sont mesurées par diffraction de rayons X ou par des méthodes optiques.

7. Pièce selon l'une des revendications 1 à 6, dans laquelle les particules métalliques présentent une forme régulière et/ou une forme irrégulière, en particulier les particules métalliques étant en forme de plaquettes, de billes, de fibres ou présentant la forme de whiskers.

8. Pièce selon l'une des revendications 1 à 7, dans laquelle les particules métalliques sont orientées de telle sorte qu'une orientation longitudinale des particules métalliques est orientée en direction de dissipation de chaleur.

9. Pièce selon l'une des revendications 1 à 8, dans laquelle les particules métalliques sont réparties de façon homogène dans la matière plastique ou bien il se présente une structure graduée.

10. Pièce selon l'une des revendications 1 à 9, laquelle est réalisée sous forme d'adsorbant.

11. Procédé de réalisation d'une pièce, comprenant les étapes suivantes consistant à :
réaliser un substrat par insertion de particules métalliques dans une matière plastique, et revêtir au moins partiellement la matière plastique présentant les particules métalliques par au moins un composé, choisi parmi le zéolithe, les matériaux similaires au zéolithe que sont le phosphate d'aluminium, le phosphate de silicium et d'aluminium et le silicate d'aluminium, et/ou par un composé de structure métallo-organique.

12. Procédé selon la revendication 11, dans lequel le revêtement au moins partiel s'effectue du fait que ledit au moins un composé est cristallisé directement sur le substrat.

13. Utilisation de la pièce selon l'une des revendications 1 à 10 à titre d'adsorbant et dans des processus de catalyse.

14. Utilisation selon la revendication 13, dans laquelle l'adsorbant est mis en œuvre dans un processus de sorption ouverte, en particulier pour la déshydratation, la climatisation, le séchage et le refroidissement, ou
l'adsorbant est mis en œuvre dans un processus de sorption fermée, en particulier pour des processus d'adsorption cycliques, ou
l'adsorbant est mis en œuvre dans un processus de sorption générale, tel que la concentration de substances nocives et la séparation des matières.
